## Europäisches Patentamt
## European Patent Office
## Office européen des brevets

(11) Publication number: **0 078 279**
**B1**

# EUROPEAN PATENT SPECIFICATION

(45) Date of publication of patent specification: **13.11.85**

(51) Int. Cl.⁴: **B 60 P 1/60, B 65 D 88/22**

(21) Application number: **82901353.1**

(22) Date of filing: **30.04.82**

(86) International application number:
**PCT/FI82/00015**

(87) International publication number:
**WO 82/03826 11.11.82 Gazette 82/27**

(54) **METHOD AND APPARATUS FOR THE TRANSPORTATION OF GRANULAR OR FLOURY MATERIAL.**

(30) Priority: **30.04.81 FI 811362**

(43) Date of publication of application:
**11.05.83 Bulletin 83/19**

(45) Publication of the grant of the patent:
**13.11.85 Bulletin 85/46**

(84) Designated Contracting States:
**DE FR GB NL SE**

(56) References cited:
**DE-A-1 580 567**
**DE-C- 969 901**
**US-A-2 712 797**
**US-A-2 803 491**
**US-A-3 025 073**
**US-A-3 639 007**

(73) Proprietor: **OY PARTEK AB**
**Multilift-myynti, PL 52**
**SF-21201 Raisio (FI)**

(72) Inventor: **RAISIO, Reijo**
**Eskonkatu 11 A 20**
**SF-20340 Turku 34 (FI)**

(74) Representative: **Topps, Ronald et al**
**D. YOUNG & CO 10 Staple Inn**
**London WC1V 7RD (GB)**

## Description

The present invention relates to a method and apparatus for the transportation of granular or floury material, i.e. as so-called bulk cargo, on the platform of a truck or in a container by use of a flexible container lining the load space and a funnel device for unloading the cargo.

It is known to provide a vehicle load carrying compartment with a flexible container having a discharge funnel device for transporting granular or pulverulent material, the flexible container being folded or collapsed when not in use to enable the load carrying compartment to be used for carrying other goods.

US—A—2 803 491 discloses a transporter trailer for transporting vehicles, such as motor cars, provided with a flexible container which when the transporter is not carrying vehicles, is placed within the structure of the transporter and used for transporting grain or like material in bulk. The flexible container when not in use is folded flat and rolled up for storage or transporting with the trailer. The flexible container is liable to be damaged whilst in its rolled-up state.

US—A—2 712 797 discloses a vehicle in which the load carrying compartment is provided with a flexible container for use in transporting granular or pulverulent material in bulk, the container having a discharge spout. The flexible container when not in use is collapsed against one of the walls of the compartment so that other goods can be transported in the compartment. The flexible container is collapsed and moved by a complex collapsing mechanism which substantially increases the cost of the installation.

DE—A—1 580 567 discloses a vehicle in which the load carrying compartment is provided with two flexible containers for use in transporting granular material, each container when not in use being collapsed and folded back into a side compartment formed by the load carrying compartment, thereby leaving the remainder of the compartment free for carrying other goods. Pivotable plates protect the flexible container when in the folded back condition.

DE—C—969 901 discloses a railway wagon provided within the interior of the load carrying compartment with flexible bellows-like containers which extend downwardly from the roof of the wagon and have a discharge duct at their bottom end. When not in use the containers are collapsed vertically upwardly against the roof.

According to the present invention in one aspect, there is provided a method for the transportation of granular or floury material in a convertible load compartment formed on the platform of a truck or in a container by a large flexible container lining the load space and cooperating with a funnel device through which the contents of the flexible container are unloaded, the funnel device being placed on the platform in the container at ·the rear end thereof with its outlet opening directed towards the rear of the platform or container and the flexible container having a mouth opening fixed to the inlet end of the funnel of the funnel device, characterised in that before the material is loaded a cover covering the inlet end of the funnel is opened and the flexible container which has been folded and stored completely within the funnel is pulled out of the funnel and its end opposite the mouth opening fastened to the front end of the platform or container, and that when other goods are to be transported after unloading material the flexible container is detached at its front end from the platform or container and folded and stored in the funnel for protection, and the inlet end of the funnel is closed by means of the cover.

According to the present invention in another aspect there is provided apparatus comprising a platform of a truck or a container provided with a large flexible container having a mouth opening fixed to the inlet end of a funnel of a funnel device, characterised in that the funnel is provided at its inlet end with a cover and the flexible container can be folded and stored completely within the funnel and the inlet end of the funnel closed by said cover, and said funnel device is received within the confines of the platform or container at the rear end thereof so that the rear end of the load space can be kept closed during transportation of the material.

The invention will now be described, by way of an example, with reference to the accompanying drawings, in which:—

Figure 1 is a schematical side view of a truck provided with an unloading funnel device and a large sack for the material, the load platform of the truck being shown in section;

Figure 2 shows on an enlarged scale a more detailed illustration of the arrangement of the front end of the load platform construction shown in Figure 1;

Figure 3 is a more detailed illustration of the rear end of the load platform construction shown in Figure 1 including the funnel;

Figure 4 is a plan view in section of the construction shown in Figure 3;

Figure 5 shows a fluidisation element as viewed perpendicularly to its plane;

Figure 6 is a sectional view of the fluidisation element taken along the line A—A of Figure 4;

Figure 7 is a sectional view of the fluidisation element taken along the line B—B of Figure 4;

Figure 8 is a plan view of the truck shown in Figure 1 provided with a discharge device and a large sack;

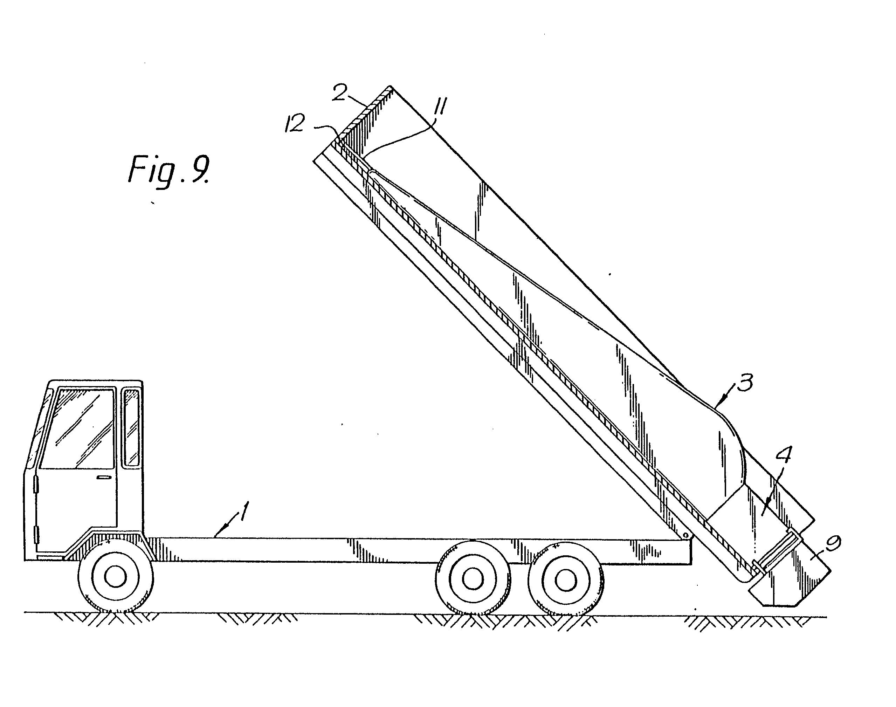

Figure 9 is a side view of the truck during the unloading of the contents of the large sack; and

Figure 10 is a sectional side view of the large sack when stored completely inside the funnel for the return transportation.

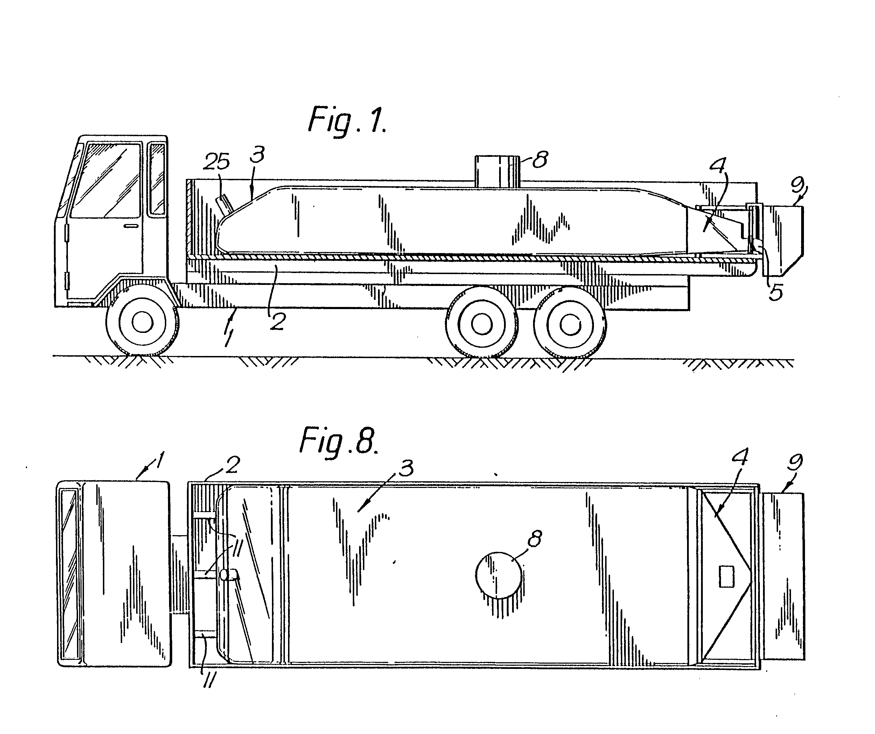

Figure 1 schematically illustrates a situation in which a granular or floury material, i.e. so-called bulk cargo, is being transported by a truck 1. The truck 1 is provided with a load platform 2, which may be a conventional exchange platform. Onto the platform 2, a flexible container such as a large sack 3 is fitted, which at its rear end is dust and water-tightly connected to the front edge of a funnel 7 of a funnel device 4. The upper part of the large sack 3 is provided with a filling opening B. The rear part of the funnel device 4 is provided with a discharge opening 5, to which a discharge device 9 can be connected. During transportation the funnel device 4 and the large sack 3 are totally inside the load space of the platform 2 so that the rear gates or the tail board of the platform 2 can be kept closed. This is very important, e.g. during possible railway transportation. The discharge device 9 is, as a rule, not connected to the funnel device 4 during transportation, the connecting thereof taking place only at the discharge site.

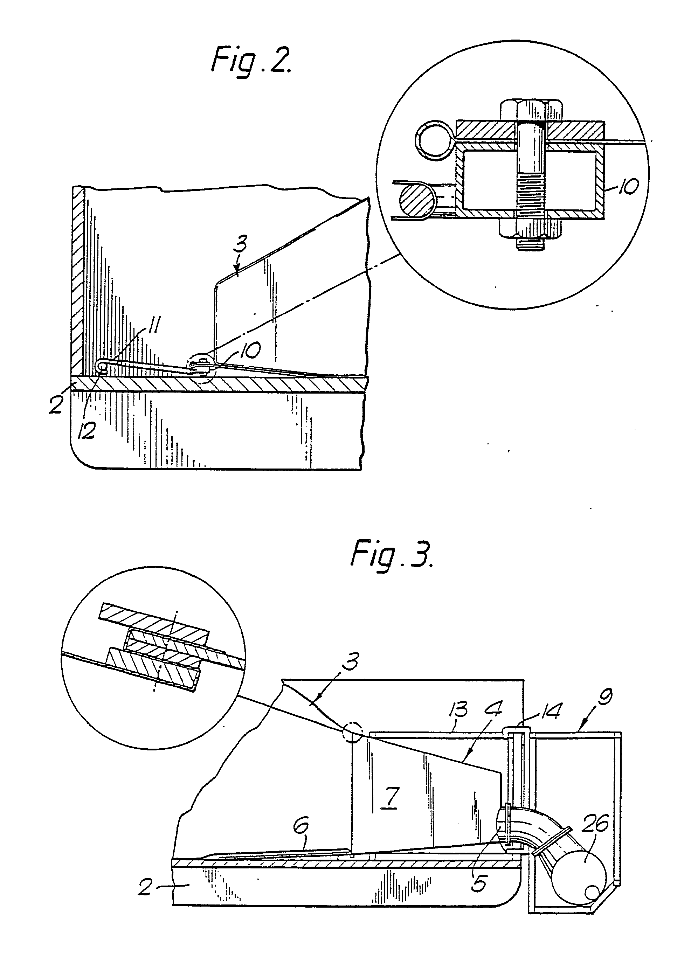

As will be seen from Figure 2, a transverse beam 10 is fixed to the bottom edge of the front part of the large sack 3, to which beam 10 fastening hooks 11 are also connected for fastening the front part of the large sack 3 to the front end of the platform 2, which is provided with fastening loops 12 for engagement by the fastening hooks 11.

Figure 3 shows the locations of the various components at the rear part of the platform 2. The funnel device 4 is located at the rear part of the platform 2, and the discharge device 9 is connected by means of hooks 14 onto a frame construction 13 of the funnel device 4, which discharge device 9 is hereby connected to the discharge opening 5 of the funnel device 4. Figure 3 also shows a detailed view of the connection between the rear part of the large sack 3 and the front edge of the funnel 7 of the funnel device 4. The funnel device 4 also includes a protecting cover 6 attached by means of hinges to the bottom edge of the funnel 7, which cover 6 is, as shown in Figure 3, pivoted down against the bottom of the platform 2, where it forms a ramp from the bottom face of the platform 2 into the funnel 7.

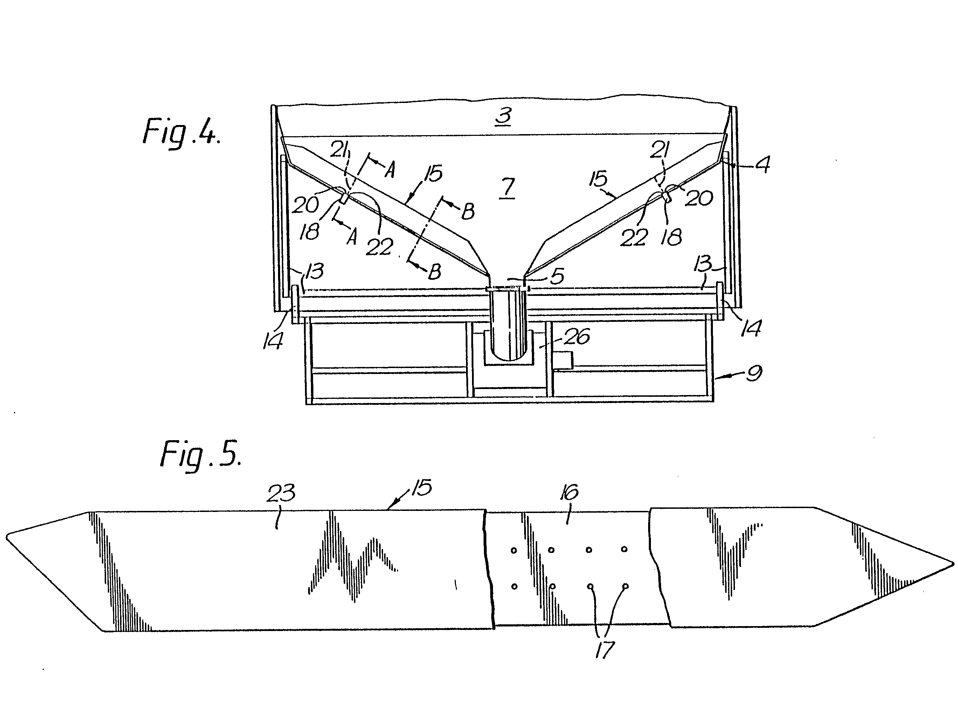

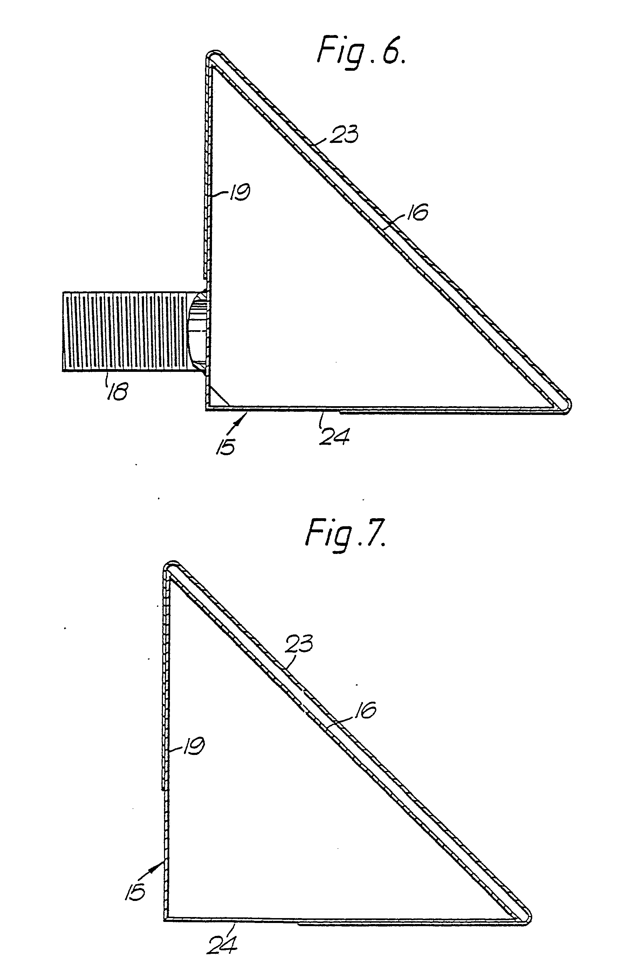

Figure 4 shows in greater detail the construction of the funnel device 4 and discharge device 9 shown in Figure 3 as a sectional top view. The discharge opening 5 is placed in the rear part of the funnel 7 at the middle. At both sides of the discharge opening 5, against the rear wall of the funnel 7, fluidisation elements 15 are provided. The fluidisation elements 15 inside the funnel 7 are readily detachable, separate modules. The fluidisation elements 15 consist of a box structure, as will be seen in the sectional views of Figures 6 and 7. The front wall 16 of the fluidisation element 15 is perforated as shown in Figure 5. In each fluidisation element 15, at the rear wall 19, there is an inlet pipe 18 for passing the fluidisation air into the box structure of the fluidisation element 15 and from there the air passes through the holes 17 in the front wall 16 of the fluidisation element 15 into the funnel 7. Each fluidisation element 15 is, at the inlet pipe 18, divided by a partition wall 21 into two separate box compartments, into both of which the fluidisation air enters through the inlet pipe 18. At the connection point of the inlet pipe 18, the rear wall 19 of the fluidisation element 15 is, at both sides of the partition wall 21 in the rear wall 19, provided with holes 20 and 22 for the supply of fluidisation air into the various compartments of the fluidisation element. By means of the relative size of the holes 20 and 22 it is possible to control the quantity of air entering into the compartments. The holes 22 passing into the compartments of the fluidisation elements 15 placed closer to the discharge opening 5 of the funnel 7 in the fluidisation elements 15 are preferably smaller than the holes 20 passing into the compartments of the fluidisation elements 15 placed more distant from the discharge opening 5. Moreover, a fluidisation fabric 23 is fastened to the fluidisation elements 15. The fluidisation fabric 23 is fastened by gluing so that the fabric is not glued within the area of the front wall 16 of the fluidisation element 15, but only at its edge portions onto the rear wall 19 and bottom 24 of the fluidisation element 15 in the way shown in Figures 6 and 7.

When transportation of a granular or floury material by means of the equipment in accordance with the present invention is required, the funnel device 4 is fastened to the rear part of the platform 2 so that the funnel device 4 cannot move on the platform 2 and that it cannot fall down either when the loaded platform 2 is dumped. The large sack 3 is spread onto the platform 2 and fastened at its front end by means of belts and hooks 11 to the fastening loops 12 at the front end of the platform 2. The large sack 3 is filled with the granular or floury material through the filling sock forming the filling opening 8, which is after filling closed by means of a sack-closing cord. An air-removal opening 25 is provided which consists of an air-removal sock, which is also closed by means of a sack-closing cord. When the truck arrives at the unloading site, the discharge device 9 is connected to the rear part of the funnel device 4 in the way shown in Figures 3 and 4 and supported by the hanging hooks 14, and a screw feeder or compartment feeder 26 of the discharge device 9 is connected to the discharge opening 5 of the funnel device 4. Unhindered by the discharge device 9, the platform 2 may be tipped fully without the device 9 contacting the ground. Through a discharge hose connected to the discharge device 9, it is possible to unload the load from the large sack 3, e.g., into a silo above the ground or into any other desirable location. The load may also be unloaded without a discharge device 9 by dumping the load through a length of discharge hose into an underground container. During the discharge operation, air is passed into the fluidisation elements 15 via the inlet pipes 18, whereby the flowing of the material from the large sack 3 into the funnel 7 and from there further into the discharge opening 5 can be made smooth. By the arrangement of two separate compartments in each fluidisation element 15, it is achieved that the air cannot escape along the easiest route out, e.g., when the other end of the fluidisation elements 15 is already uncovered and there is still material on the other end, e.g. a thick layer of cement. Instead of the fluidisation elements 15, inside the funnel 7 it is possible also to use a different type of activating device, such as a vibrator, expansion fabrics etc. However, especially in the case of transportation of cement, fluidisation devices of the type shown in the drawings are particularly well suited as activating devices inside the funnel 7, said fluidisation devices being coated with fluidisation fabric 23. The inside walls and bottom of the funnel 7 may be lined with fabric, which may be of the same material as the large sack 3 itself. Owing to the said lining, the cement is no longer gradually hardened on the walls of the funnel 7.

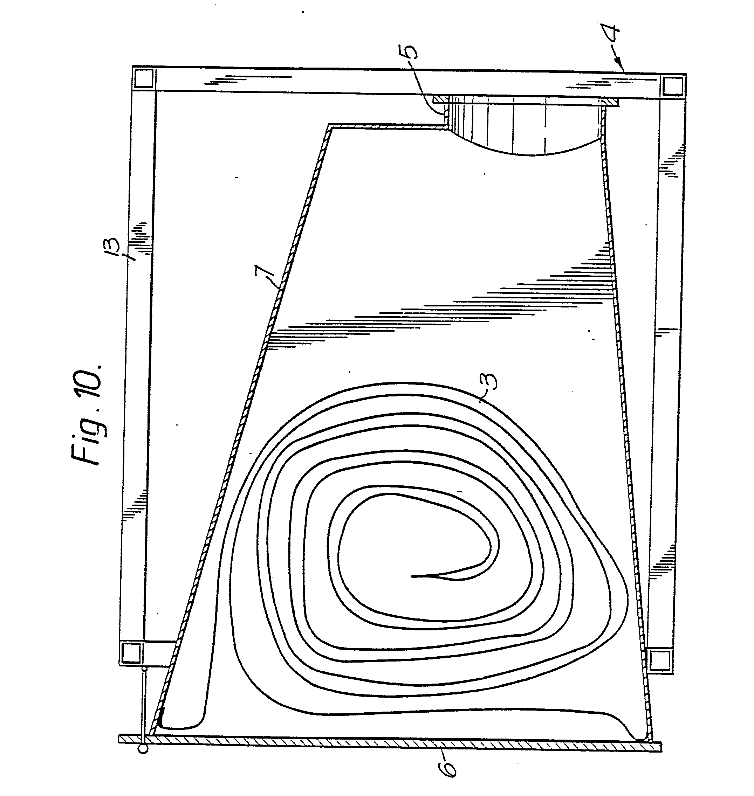

When the load is completely unloaded, the platform 2 is lowered from the tipping position, the discharge device 9 is detached from the funnel device 4, and additionally the fastening of the front end of the large sack is disconnected. Hereupon the large sack 3 is wound as a roll in the manner shown in Figure 10 into the funnel 7, which is then closed by the protective cover 6. Hereupon the platform 2 is free for use for other transportation, e.g. of parcels. In such a case, during the transportation, the funnel device 4 may still be fastened to the rear part of the platform 2, or it may be detached from its fastenings and be shifted to any desired position on the platform 2, or it may be removed entirely.

**Claims**

1. A method for the transportation of granular or floury material in a convertible load compartment formed on the platform (2) of a truck or in a container by a large flexible container (3) lining the load space and cooperating with a funnel device (4) through which the contents of the flexible container (3) are unloaded, the funnel device (4) being placed on the platform (2) in the container at the rear end thereof with its outlet opening (5) directed towards the rear of the platform (2) or container and the flexible container (3) having a mouth opening fixed to the inlet end of the funnel (7) of the funnel device (4), characterised in that before the material is loaded a cover (6) covering the inlet end of the funnel (7) is opened and the flexible container (3) which has been folded and stored completely within the funnel (7) is pulled out of the funnel (7) and its end opposite the mouth opening fastened to the front end of the platform (2) or container, and that when other goods are to be transported after unloading material the flexible container (3) is detached at its front end from the platform or container and folded and stored in the funnel (7) for protection, and the inlet end of the funnel (7) is closed by means of the cover (6).

2. Apparatus for use in carrying out the method claimed in claim 1, comprising a platform (2) of a truck or a container provided with a large flexible container (3) having a mouth opening fixed to the inlet end of a funnel (7) of a funnel device (4), characterised in that the funnel (7) is provided at its inlet end with a cover (6) and the flexible container (3) can be folded and stored completely within the funnel (7) and the inlet end of the funnel (7) closed by said cover (6), and said funnel device (4) is received within the confines of the platform (2) or container at the rear end thereof so that the rear end of the load space can be kept closed during transportation of the material.

3. Apparatus as claimed in claim 2, further characterised in that the protective cover (6) is attached to the bottom edge of the funnel (7) by means of hinges, and the cover (6) when the material is being unloaded, functions as a ramp underneath the flexible container (3) in front of the funnel (7) guiding the material into the funnel device (4).

4. Apparatus as claimed in claim 2 or claim 3, further characterised in that fluidisation elements (15) are fitted inside the funnel device (4) at both sides of the discharge opening (5) and are divided by a transverse partition wall (21) into two compartments, into which the passage of air is arranged so that the air is passed into the compartment placed closer to the discharge opening (5) through a smaller hole (22) than into the compartment placed more distant from the discharge opening (5), into which latter compartment a hole (20) passes via an inlet pipe (18).

**Revendications**

1. Procédé permettant le transport d'un matériau granulaire ou farineux dans un compartiment convertible de chargement, formé sur la plate-forme (2) d'un camion ou dans un conteneur, grâce à l'utilisation d'un conteneur flexible de grandes dimensions (3) délimitant l'espace de chargement et coopérant avec un dispositif formant trémie (4), au moyen duquel le contenu du conteneur flexible (3) est déchargé, le dispositif formant trémie (4) étant disposé sur la plate-forme (2) à l'intérieur du conteneur, au niveau de l'extrémité arrière de ce dernier, de telle sorte que son ouverture de sortie (5) est dirigée vers l'arrière de la plate-forme (2) ou du conteneur, et le conteneur flexible (3) comportant une embouchure fixée à l'extrémité d'admission de la trémie (7) du dispositif formant trémie (4), caractérisé en ce que, avant que le matériau soit chargé, on ouvre un couvercle (6) recouvrant l'extrémité d'admission de la trémie (7) et qu'on sort le conteneur flexible (3), qui a été replié et stocké complètement à l'intérieur de la trémie (7), hors de cette dernière et qu'on fixe son extrémité en face de l'embouchure fixée sur l'extrémité avant de la plate-forme (2) ou du conteneur, et que, lorsque d'autres marchandises doivent être transportées après déchargement du matériau, on détache le conteneur flexible (3), au niveau de son extrémité avant, de la plate-forme ou du conteneur et on le replie et on le range dans la trémie (7) de manière qu'il soit protégé, et l'on ferme l'extrémité d'admission de la trémie (7) au moyen du couvercle (6).

2. Appareil destiné à être utilisé pour la mise en oeuvre du procédé selon la revendication 1, incluant une plate-forme (2) d'un camion, ou d'un conteneur, équipé d'un conteneur flexible de grandes dimensions (3) comportant une embouchure fixée à l'extrémité d'admission d'une trémie (7) ou d'un dispositif formant trémie (4), caractérisé en ce que la trémie (7) est munie, au niveau de son extrémité d'admission, d'un couvercle (6) et que le conteneur flexible (3) peut être replié et logé complètement à l'intérieur de la trémie (7) et l'extrémité d'admission de la trémie (7) peut être fermée au moyen dudit couvercle (6), et que ledit dispositif formant trémie (4) est logé à l'intérieur des limites de la plate-forme (2) ou du conteneur, au niveau de l'extrémité arrière de cette dernière, de sorte que l'extrémité arrière de l'espace de chargement doit être maintenue fermée pendant le transport du matériau.

3. Appareil selon la revendication 2, caractérisé en outre en ce que le couvercle de protection (6) est fixé au bord inférieur de la trémie (7) au moyen de charnières, et que lorsque lors du déchargement du matériau, le couvercle (6) agit à la manière d'une rampe située au-dessous du conteneur flexible (3) et en avant de la trémie (7) et guidant le matériau dans le dispositif formant trémie (4).

4. Appareil selon la revendication 2 ou 3, caractérisé en outre en ce que des éléments de fluidisation (15) sont montés à l'intérieur du dispositif formant tunnel (4) sur les deux côtés de l'ouverture de décharge (5) et sont subdivisés par une cloison transversale (21) en deux compartiments, dans lesquels se trouve disposé le passage d'air de telle sorte que l'air pénètre à l'intérieur du compartiment qui est plus rapproché de l'ouverture de décharge (5), par l'intermédiaire d'un trou plus petit (22), que dans le compartiment qui est plus éloigné de l'ouverture de décharge (5) et dans lequel débouche un trou (20) par l'intermédiaire d'une canalisation d'admission (18).

**Patentansprüche**

1. Verfahren zum Transport granulierten oder mehlförmigen Materials in einem umsetzbaren, auf der Plattform (2) eines Lastwagens oder in einem Container ausgebildeten Lastbehälter unter Verwendung eines großen, flexiblen Containers (3), der den Laderaum auskleidet und mit einer Trichtervorrichtung (4) zusammenwirkt, durch die der Inhalt des flexiblen Containers (3) entladen wird, wobei die Trichtervorrichtung (4) auf der Plattform (2) oder in dem Container an deren bzw. dessen hinterem Ende angeordnet ist und ihre Auslaßöffnung (5) zur Rückseite der Plattform (2) oder des Containers gerichtet ist und wobei der flexible Container (3) eine am Einlaßende des Trichters (7) der Trichtervorrichtung (4) befestigte Ausflußöffnung aufweist, dadurch gekennzeichnet, daß vor der Ladung des Materials ein das Einlaßende des Trichters (7) abdeckender Deckel (6) geöffnet wird und der gefaltete und vollständig im Trichter (7) gelagerte flexible Container (3) aus dem Trichter (7) gezogen und sein dem Auslaßende gegenüberliegendes Ende am Vorderende der Plattform (2) oder des Containers befestigt wird und daß, wenn andere Güter nach dem Entladen des Materials zu transportieren sind, der flexible Container (3) an seinem Vorderende von der Plattform oder dem Container gelöst, gefaltet und zum Schutz in dem Trichter (7) gelagert und das Einlaßende des Trichters (7) mittels des Deckels (6) verschlossen wird.

2. Vorrichtung zur Durchführung des Verfahrens nach Anspruch 1, mit einer Plattform (2) eines Lastwagens oder einem Container sowie einem großen flexiblen Container (3), der eine am Einlaßende eines Trichters (7) einer Trichtervorrichtung (4) befestigte Auslaßöffnung aufweist, dadurch gekennzeichnet, daß der Trichter (7) an seinem Einlaßende mit einem Deckel (6) versehen ist, daß der flexible Container (3) gefaltet und vollständig innerhalb des Trichters (7) und dem vom Deckel (6) verschlossenen Einlaßende des Trichters (7) gespeichert werden kann und daß die Trichtervorrichtung (4) im Umfange der Plattform (2) oder des Containers an dessen bzw. deren hinterem Ende angeordnet ist, so daß das Hinterende des Laderaumes beim Transport des Materials geschlossen gehalten werden kann.

3. Vorrichtung nach Anspruch 2, dadurch gekennzeichnet, daß der Schutzdeckel (6) an der Unterkante des Trichters (7) mittels Gelenke befestigt ist und daß der Deckel (6) zum Entladen des Materials als Rampe unterhalb des flexiblen Containers (3) vor dem Trichter (7) dient und das Material in die Trichtervorrichtung (4) leitet.

4. Vorrichtung nach Anspruch 2 oder 3, dadurch gekennzeichnet, daß Fluidisierungselemente (15) innerhalb der Trichtervorrichtung (4) an beiden Seiten der Entladeöffnung (5) angebracht und mittels einer Quertrennwand (21) in zwei Kammern unterteilt sind, in denen ein Luftkanal so angeordnet ist, daß die Luft in die der Entladeöffnung (5) näher liegende Kammer durch ein kleineres Lock (22) als in die weiter entfernt von der Entladeöffnung (5) angeordnete Kammer geleitet wird, wobei die Luft in die letztere Kammer durch ein Loch (20) über ein Einlaßrohr (18) geleitet wird.

Fig.1.

Fig.8.

# Fig. 2.

# Fig. 3.

Fig.4.

Fig.5.

0 078 279

0 078 279

Fig.6.

23

19

16

18

15

24

Fig.7.

23

16

19

15

24

4

Fig. 9.

Fig. 10.

0 078 279